# EUROPEAN PATENT APPLICATION

(11) **EP 4 104 950 A1**
(43) Date of publication of application: **21.12.2022**
(21) Application number: 22173815.6
(22) Date of filing: 17.05.2022
(51) Int. Cl.: B22D 18/04, B22D 18/08, B22D 46/00, G05B 19/418

(54) **A LOW PRESSURE CASTING METHOD AND A SYSTEM THEREOF**

(30) Priority: 18.06.2021 TR 202109958
(71) Applicant: Cevher Jant Sanayii A.S., 35411 IZMIR (TR)
(72) Inventor: YILDIRIM, Ilker, IZMIR (TR); YILDIRIM, Halil Ibrahim, IZMIR (TR); OZMEN, Oguz, IZMIR (TR); ARMAKAN, Elvan, IZMIR (TR)
(74) Representative: Cayli, Hülya

(57) **Abstract**

The present invention discloses a low pressure casting method and a system thereof. Said system comprises at least one casting unit (1); at least two sensors (2), each for detecting at least one process parameter in the casting unit (1) during the casting process; at least one intermediate control unit (3) which is connected with the sensors (2) and the casting unit (1) for receiving the process parameters detected by the sensors (2) and controlling operation of the casting unit (1); at least one main control unit (4) for comparing the production parameters detected by the sensors (2) during the casting process with the acceptable maximum and minimum values in the bill of materials, so that quality of the produced part is determined. Said method comprises the steps of initiating the part production process in a casting unit (1); receiving at least two different process parameters by means of at least two sensors (2) during the part production in the casting unit (1); sending the received process parameters to at least one intermediate control unit (3); transmitting the process parameters, which have been sent to the intermediate control unit (3), to at least one main control unit (4); detecting quality of the produced part by comparing the process parameters in at least one bill of materials in the main control unit (4), which contains maximum and minimum acceptable values of at least two process parameters for the casting process, with the process parameters transmitted from the intermediate control unit (3).

## Description

### Technical Field

The present invention relates to a low pressure casting method and a system thereof.

### Background of the Invention

Metal part production applications are generally carried out by melting a metal raw material and shaping it in a mold. According to the prior art, various techniques are used to manufacture metal parts in this way. One of the applications known in the art is the socalled low pressure casting unit. Low pressure casting units basically comprise a chamber for storing molten metal raw material; a molding system located above said chamber; and a transmission line for transmitting molten metal between said molding system and the chamber. Here, when low pressure air is sent into the chamber, the molten metal raw material in the chamber passes through the transmission line, with the effect of the pressure of the air, such that it reaches the molding system. The molten metal reaching the molding system is cooled and solidified to produce the desired part.

In addition to the above-mentioned components, low pressure casting units comprise other components such as heaters for heating the chamber, the transmission line and the molding system; a compressed air source for sending low pressure air into the chamber; coolers for cooling the molten metal in the molding system. Operating conditions of said components during the casting process directly affect the quality of the produced part. According to the prior art applications, whether the part is produced at a desired quality is ensured by performing a quality test after the part is finalized. As a result of this test, if it is decided that the produced part is not of the desired quality, the part is scrapped. However, this process takes a relatively long time as the part is expected to be finalized to perform this test. Therefore, the total production time and cost of the part increase.

### Brief Description of the Invention

The present invention provides a low pressure casting method and a system thereof. The system comprises at least one casting unit having at least one chamber for storing molten metal raw material, at least one molding system located above said chamber, at least one transmission line for transmitting the molten metal between the molding system and the chamber, at least one heater for heating the chamber and/or the transmission line and/or the molding system, at least one compressed air source for sending low pressure air into the chamber, and at least one cooler for cooling the molding system; at least two sensors, each for detecting at least one process parameter in the casting unit during the casting process; at least one intermediate control unit which is connected with the sensors and the casting unit for receiving the process parameters detected by the sensors and controlling operation of the casting unit; at least one main control unit which is connected with the intermediate control unit and comprises at least one bill of materials containing maximum and minimum acceptable values of at least two process parameters for a casting process, wherein the main control unit receives the production parameters detected by the sensors during a casting process from the intermediate control unit and compares the detected production parameters with the acceptable maximum and minimum values in the bill of materials, so that quality of the produced part is determined. In turn, said method comprises the steps of initiating the part production process in at least one casting unit having at least one chamber for storing molten metal raw material, at least one molding system located above said chamber, at least one transmission line for transmitting the molten metal between the molding system and the chamber, at least one heater for heating the chamber and/or the transmission line and/or the molding system, at least one compressed air source for sending low pressure air into the chamber, and at least one cooler for cooling the molding system; receiving at least two different process parameters by means of at least two sensors during the part production in the casting unit; sending the received process parameters to at least one intermediate control unit; transmitting the process parameters, which have been sent to the intermediate control unit, to at least one main control unit; detecting quality of the produced part by comparing the process parameters in at least one bill of materials in the main control unit, which contains maximum and minimum acceptable values of at least two process parameters for the casting process, with the process parameters transmitted from the intermediate control unit.

Thanks to the low pressure casting method and the system according to the present invention, the quality of the part produced in the low pressure casting application can be determined during the production (casting) process. Therefore, since the quality of said part can be determined even before the production is completed, the part can be scrapped without spending more time and resources if the part is not of the desired quality.

### Object of the Invention

An object of the present invention is to provide a low pressure casting method and a system thereof.

Another object of the present invention is to provide a low pressure casting method and a system thereof for detecting quality of the produced part during a casting process.

### Description of the Invention

An exemplary embodiment of the low pressure casting system according to the present invention is illustrated in the attached drawing, in which:

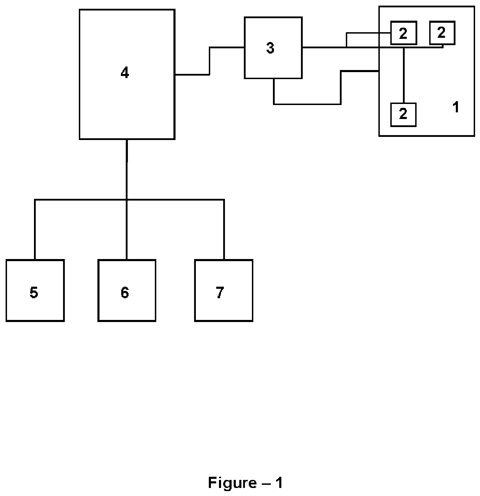

Figure 1 is a block diagram of the low pressure casting system according to the invention.

All the parts illustrated in figures are individually assigned a reference numeral and the corresponding terms of these numbers are listed below:

| | |
|---|---|
| Casting unit | (1) |
| Sensor | (2) |
| Intermediate control unit | (3) |
| Main control unit | (4) |
| Informing unit | (5) |
| Memory unit | (6) |
| Connection unit | (7) |

### Description of the Invention

Metal parts are structures used in various fields since they are durable and have a long service life. Metal raw materials are generally melted and poured into molds, thus producing parts with a desired shape. One of the casting applications used in the production of metal parts is low pressure casting units. The quality of the parts produced in low pressure casting units can vary according to many parameters during production. Errors in the part can usually be detected after the production process is completed, which leads to time and energy loss. For this reason, the present invention provides a low pressure casting method and a system thereof for determining the quality of the produced part during the casting process.

The low pressure casting system according to the present invention, for which an exemplary block diagram is illustrated in Figure 1, comprises at least one casting unit (1) having at least one chamber for storing molten metal raw material, at least one molding system located above said chamber, at least one transmission line for transmitting the molten metal between the molding system and the chamber, at least one heater for heating the chamber and/or the transmission line and/or the molding system, at least one compressed air source for sending low pressure air into the chamber, and at least one cooler for cooling the molding system; at least two sensors (2), each for detecting at least one process parameter in the casting unit (1) during the casting process; at least one intermediate control unit (3) which is connected with the sensors (2) and the casting unit (1) for receiving the process parameters detected by the sensors (2) and controlling operation of the casting unit (1); at least one main control unit (4) which is connected with the intermediate control unit (3) and comprises at least one bill of materials containing maximum and minimum acceptable values of at least two process parameters for a casting process, wherein the main control unit (4) receives the production parameters detected by the sensors (2) during a casting process from the intermediate control unit (3) and compares the detected production parameters with the acceptable maximum and minimum values in the bill of materials, so that quality of the produced part is determined.

The low pressure casting method according to the present invention comprises the steps of initiating the part production process in at least one casting unit (1) having at least one chamber for storing molten metal raw material, at least one molding system located above said chamber, at least one transmission line for transmitting the molten metal between the molding system and the chamber, at least one heater for heating the chamber and/or the transmission line and/or the molding system, at least one compressed air source for sending low pressure air into the chamber, and at least one cooler for cooling the molding system; receiving at least two different process parameters by means of at least two sensors (2) during the part production in the casting unit (1); sending the received process parameters to at least one intermediate control unit (3); transmitting the process parameters, which have been sent to the intermediate control unit (3), to at least one main control unit (4); detecting quality of the produced part by comparing the process parameters in at least one bill of materials in the main control unit (4), which contains maximum and minimum acceptable values of at least two process parameters for the casting process, with the process parameters transmitted from the intermediate control unit (3).

In an exemplary embodiment of the invention, the casting unit (1) is a unit that performs a low pressure casting process as in conventional applications. Here, unlike the structures provided in conventional applications, the system according to the present invention uses at least two different sensors (2) that detect different process parameters of the casting unit (1). Said sensors (2) measure at least two (preferably all) of the process parameters that affect the quality of the produced part, such as temperature of the chamber, temperature of the casting system, molten metal temperature in the chamber, temperature of the cooler (e.g. air/liquid temperature in air/liquid cooled cooler), pressure of the cooler (e.g. air/liquid pressure in air/liquid cooled cooler), flow rate of the cooler, ambient temperature, ambient humidity, ground vibration, molding vibration, etc. Here, during the production of a part, said process parameters are detected in real time and the detected parameters are first sent to the intermediate control unit (3) and then to the main control unit (4). Here, preferably, each of the parameters is detected by different sensors (2). For example, according to the dimensions of the produced part, measurements can be made from 80 different points by means of sensors. The intermediate control unit (3) may be a PLC (programmable logic circuit) that controls the operation of the casting unit (1). The main control unit (4) may be a computer that can exchange data with the intermediate control unit (3). The main control unit (4) compares the real-time process parameters transmitted by the intermediate control unit (3) with a bill of materials. The bill of materials contains the acceptable maximum and minimum values of the process parameters. Here, the quality of the produced part is determined by checking whether the real-time measured process parameter remains between the maximum and minimum values in the bill of materials. For example, if all real-time detected process parameters fall within the range in the bill of materials, the produced part is determined to be of high quality. If some of the real-time detected process parameters are out of range in the bill of materials, then the quality level of the produced part is determined according to the number of parameters that are outside said range and the deviation from said acceptable maximum or minimum value. Here, since the quality of the part can be determined before the production of the part is completed, the production process can be carried out in a practical and reliable way.

In a preferred embodiment of the invention, the low pressure casting system comprises at least one informing unit (5) for presenting, to the users, the part quality information determined by the main control unit (4) and/or the comparison of the process parameters in the bill of materials with the process parameters transmitted from the intermediate control unit (3). Said informing unit may be in the form of a screen or a printer to present visual information to users, or it may be in the form of a speaker to provide audible information to users. In this embodiment, after the step of detecting quality of the produced part by comparing the process parameters in at least one bill of materials in the main control unit (4), which contains maximum and minimum acceptable values of at least two process parameters for the casting process, with the process parameters transmitted from the intermediate control unit (3), the method comprises the step of presenting, to the users, the determined part quality information and/or the comparison of the process parameters in the bill of materials with the process parameters transmitted from the intermediate control unit (3). Thus, it is ensured that users (for example, a production manager) are informed about the produced part. Here, the part quality information can be shown to the users only as a numerical information, or it can also be displayed in the form of graphs showing the comparisons of each information measured by the sensors (2) with the acceptable maximum and minimum values in the bill of materials.

In another preferred embodiment of the invention, the low pressure casting system comprises at least one memory unit (6) for storing the part quality information determined by the main control unit (4) and/or the comparison of the process parameters in the bill of materials with the process parameters transmitted from the intermediate control unit (3). In this embodiment, after the step of detecting quality of the produced part by comparing the process parameters in at least one bill of materials in the main control unit (4), which contains maximum and minimum acceptable values of at least two process parameters for the casting process, with the process parameters transmitted from the intermediate control unit (3), the method comprises the step of saving, to the memory unit (6), the determined part quality information and/or the comparison of the process parameters in the bill of materials with the process parameters transmitted from the intermediate control unit (3). Said memory unit (6) preferably comprises at least one database. In this way, it is possible to review the saved information retrospectively when necessary.

In a further preferred embodiment of the invention, the low pressure casting system comprises at least one connection unit (7) for connecting the main control unit (4) to a remote server (e.g. a cloud). In this embodiment, after the step of detecting quality of the produced part by comparing the process parameters in at least one bill of materials in the main control unit (4), which contains maximum and minimum acceptable values of at least two process parameters for the casting process, with the process parameters transmitted from the intermediate control unit (3), the method comprises the step of sending, to a remote server, the determined part quality information and/or the comparison of the process parameters in the bill of materials with the process parameters transmitted from the intermediate control unit (3). Therefore, said information can be obtained remotely if necessary.

Yet in another preferred embodiment of the invention, after the step of detecting quality of the produced part by comparing the process parameters in at least one bill of materials in the main control unit (4), which contains maximum and minimum acceptable values of at least two process parameters for the casting process, with the process parameters transmitted from the intermediate control unit (3), the method comprises the step of scrapping the produced part if the determined part quality is below a threshold value. In this way, the part can be scrapped before the production is completed such that the production of the related part is continued, thus preventing unnecessary resource and time waste.

In a further preferred embodiment of the invention, at least one of the sensors (2) establishes a wired connection with the intermediate control unit (3). In a different preferred embodiment, at least one of the sensors (2) establishes a wireless connection with the intermediate control unit (3). Thus, the information detected by the sensors (2) is transmitted to the intermediate control unit (3) in a practical and reliable manner.

In a preferred embodiment of the invention, the main control unit (4) comprises at least one data input unit for inputting at least one bill of materials or changing an inputted bill of materials. The data input unit may preferably comprise a keyboard and/or a mouse. In this embodiment, before the step of detecting quality of the produced part by comparing the process parameters in at least one bill of materials in the main control unit (4), which contains maximum and minimum acceptable values of at least two process parameters for the casting process, with the process parameters transmitted from the intermediate control unit (3), the method comprises the step of inputting at least one bill of materials specific to the produced part into the main control unit (4).

Thanks to the low pressure casting method and the system according to the present invention, the quality of the part produced in the low pressure casting application can be determined during the production (casting) process. Therefore, since the quality of said part can be determined even before the production is completed, the part can be scrapped without spending more time and resources if the part is not of the desired quality.

## Claims

1. A low pressure production system comprising at least one casting unit (1) which has at least one chamber for storing molten metal raw material, at least one molding system located above said chamber, at least one transmission line for transmitting the molten metal between the molding system and the chamber, at least one heater for heating the chamber and/or the transmission line and/or the molding system, at least one compressed air source for sending low pressure air into the chamber, and at least one cooler for cooling the molding system, the low pressure production system **characterized by** comprising:
- at least two sensors (2), each for detecting at least one process parameter in the casting unit (1) during the casting process;
- at least one intermediate control unit (3) which is connected with the sensors (2) and the casting unit (1) for receiving the process parameters detected by the sensors (2) and controlling operation of the casting unit (1);
- at least one main control unit (4) which is connected with the intermediate control unit (3) and comprises at least one bill of materials containing maximum and minimum acceptable values of at least two process parameters for a casting process, wherein the main control unit (4) receives the production parameters detected by the sensors (2) during a casting process from the intermediate control unit (3) and compares the detected production parameters with the acceptable maximum and minimum values in the bill of materials, so that quality of the produced part is determined.

2. A low pressure production system according to claim 1, **characterized in that** the intermediate control unit (3) is a programmable logic circuit that controls the operation of the casting unit (1).

3. A low pressure production system according to any of the preceding claims, **characterized in that** it comprises at least one informing unit (5) for presenting, to the users, the part quality information determined by the main control unit (4) and/or the comparison of the process parameters in the bill of materials with the process parameters transmitted from the intermediate control unit (3).

4. A low pressure production system according to any of the preceding claims, **characterized in that** it comprises at least one memory unit (6) for storing the part quality information determined by the main control unit (4) and/or the comparison of the process parameters in the bill of materials with the process parameters transmitted from the intermediate control unit (3).

5. A low pressure production system according to any of the preceding claims, **characterized in that** it comprises at least one connection unit (7) for connecting the main control unit (4) to a remote server.

6. A low pressure production system according to any of the preceding claims, **characterized in that** at least one of the sensors (2) establishes a wired connection with the intermediate control unit (3).

7. A low pressure production system according to any of the preceding claims, **characterized in that** at least one of the sensors (2) establishes a wireless connection with the intermediate control unit (3).

8. A low pressure production system according to any of the preceding claims, **characterized in that** the main control unit (4) comprises at least one data input unit for inputting at least one bill of materials or changing an inputted bill of materials.

9. A low pressure casting method, **characterized by** comprising the steps of:
- initiating the part production process in at least one casting unit (1) having at least one chamber for storing molten metal raw material, at least one molding system located above said chamber, at least one transmission line for transmitting the molten metal between the molding system and the chamber, at least one heater for heating the chamber and/or the transmission line and/or the molding system, at least one compressed air source for sending low pressure air into the chamber, and at least one cooler for cooling the molding system;
- receiving at least two different process parameters by means of at least two sensors (2) during the part production in the casting unit (1);
- sending the received process parameters to at least one intermediate control unit (3);
- transmitting the process parameters, which have been sent to the intermediate control unit (3), to at least one main control unit (4);
- detecting quality of the produced part by comparing the process parameters in at least one bill of materials in the main control unit (4), which contains maximum and minimum acceptable values of at least two process parameters for the casting process, with the process parameters transmitted from the intermediate control unit (3).

10. A method according to claim 9, **characterized in that** in the step of detecting quality of the produced part by comparing the process parameters in at least one bill of materials in the main control unit (4), which contains maximum and minimum acceptable values of at least two process parameters for the casting process, with the process parameters transmitted from the intermediate control unit (3), the method comprises checking whether the process parameters transmitted from the intermediate control unit (3) remain between the maximum and minimum values in the bill of materials.

11. A method according to claim 9 or 10, **characterized in that** after the step of detecting quality of the produced part by comparing the process parameters in at least one bill of materials in the main control unit (4), which contains maximum and minimum acceptable values of at least two process parameters for the casting process, with the process parameters transmitted from the intermediate control unit (3), the method comprises the step of presenting, to the users, the determined part quality information and/or the comparison of the process parameters in the bill of materials with the process parameters transmitted from the intermediate control unit (3).

12. A method according to any of the claims 9 to 11, **characterized in that** after the step of detecting quality of the produced part by comparing the process parameters in at least one bill of materials in the main control unit (4), which contains maximum and minimum acceptable values of at least two process parameters for the casting process, with the process parameters transmitted from the intermediate control unit (3), the method comprises the step of saving, to the memory unit (6), the determined part quality information and/or the comparison of the process parameters in the bill of materials with the process parameters transmitted from the intermediate control unit (3).

13. A method according to any of the claims 9 to 12, **characterized in that** after the step of detecting quality of the produced part by comparing the process parameters in at least one bill of materials in the main control unit (4), which contains maximum and minimum acceptable values of at least two process parameters for the casting process, with the process parameters transmitted from the intermediate control unit (3), the method comprises the step of sending, to a remote server, the determined part quality information and/or the comparison of the process parameters in the bill of materials with the process parameters transmitted from the intermediate control unit (3).

14. A method according to any of the claims 9 to 13, **characterized in that** after the step of detecting quality of the produced part by comparing the process parameters in at least one bill of materials in the main control unit (4), which contains maximum and minimum acceptable values of at least two process parameters for the casting process, with the process parameters transmitted from the intermediate control unit (3), the method comprises the step of scrapping the produced part if the determined part quality is below a threshold value.

15. A method according to any of the claims 9 to 14, **characterized in that** before the step of detecting quality of the produced part by comparing the process parameters in at least one bill of materials in the main control unit (4), which contains maximum and minimum acceptable values of at least two process parameters for the casting process, with the process parameters transmitted from the intermediate control unit (3), the method comprises the step of inputting at least one bill of materials specific to the produced part into the main control unit (4).
